# EUROPEAN PATENT APPLICATION

(11) **EP 1 867 502 A1**
(43) Date of publication of application: **19.12.2007**
(21) Application number: 07252413.5
(22) Date of filing: 14.06.2007
(51) Int. Cl.: B60G 17/015

(54) **Vehicle suspension system**

(30) Priority: 14.06.2006 GB 0611714
(71) Applicant: Mumford, Michael, Ailsworth, Peterborough PE5 7AE (GB)
(72) Inventor: Mumford, Michael, Ailsworth, Peterborough PE5 7AE (GB)
(74) Representative: Lamb, Richard Andrew

(57) **Abstract**

A vehicle height adjustment mechanism (30,50) for a vehicle (21) having a wheel hub assembly (3) mounted to the vehicle (21) on a vehicle suspension (22). The mechanism (30,50) comprises a lever arm (6,51), and an actuator assembly (11&10, 11&55). The lever arm (6,51) has a pivotal vehicle mounting (9) to pivotally mount the lever arm (6,51) to the vehicle (21), with the lever arm (6,51) extending between the pivotal vehicle mounting (9) and the wheel hub assembly (3). The actuator assembly (11&10, 11&55) is configured to act between the lever arm (6,51) and vehicle (21) to pivot the lever arm (6,51) to act on and move the wheel hub assembly (3) relative to the vehicle against the suspension (22). The mechanism (30,50) is only selectively engaged to act on and move the wheel hub assembly (3) relative to the vehicle (21) against the suspension (22), and in particular lower the vehicle on its suspension (22).

## Description

This invention relates to vehicle suspension systems and the control of vehicle height above the ground.

All vehicles must maintain an operating height above the ground in order for their suspension to function correctly. In some vehicles this height may be a disadvantage when considering ease of access or loading. Vehicles intended to carry heavy loads may have additional height in the unladen condition so that the height is not excessively low when laden.

It is one object of this invention to provide a suspension system which can lower the vehicle for ease of access or loading. For instance, persons in wheel chairs.

Suspension systems are known which achieve the above objective. They are generally hydro-pneumatic or air systems. These suspensions rely on some form of pump to pressurise the system which can then support the vehicle at the desired height. The disadvantage of these systems is that should the pump fail, or a leak occur, the vehicle will be let down onto its bump stops and become virtually undriveable.

It is therefore desirable to provide an improved adjustable suspension arrangement which addresses the above described problems and/or which offers improvements generally.

According to the present invention there is therefore provided a vehicle height adjustment mechanism, and vehicle including such a vehicle height adjustment mechanism, as described in the accompanying claims.

In an embodiment of the invention there is provided a a vehicle height adjustment mechanism for a vehicle having a wheel hub assembly mounted to the vehicle on a vehicle suspension. The mechanism comprises a lever arm and an actuator assembly. The lever arm has a pivotal vehicle mounting to pivotally mount the lever arm to the vehicle, and extends between the pivotal vehicle mounting and the wheel hub assembly. The actuator assembly is configured to act between the lever arm and vehicle to pivot the lever arm to act on and move the wheel hub assembly relative to the vehicle against the suspension. The wheel hub assembly, lever arm and actuator assembly are only all selectively engaged to act on and move the wheel hub assembly relative to the vehicle against the suspension.

This arrangement provides a simple separate mechanism to move the wheel hub on its suspension relative to the vehicle, and in particular lower the vehicle, without modification of the existing suspension and which, by its only selective engagement, does not interfere with normal movement of the wheel hub on the suspension. The mechanism may thereby be easily retrofitted and used on existing vehicles.

Preferably the selective engagement is provided by the actuator assembly which is configured to be selectively engaged to act between the lever arm and vehicle to pivot the lever arm to act on and move the wheel hub assembly relative to the vehicle against the suspension. The actuator assembly may accordingly be moveable between engaged and unengaged positions. Moreover when in the unengaged positions the actuator assembly and lever arm preferably does not act between the lever arm and vehicle and allows free movement of wheel hub assembly on the vehicle suspension.

Preferably the lever arm is contectable, and connected to, the wheel hub assembly. This connection may be via a drop link between the end of the lever arm and wheel hub assembly.

The actuator assembly preferably comprises a moveable member which is moveable between an engaged and an unengaged position. The moveable member may be pivotally mounted to the vehicle, and/or to the lever arm.

The moveable member may comprise an abutment which is adapted to engage the vehicle when the moveable member is in the engaged position. The actuator assembly may comprise an actuator mounted between the lever arm and the movable member to move the movable member.

Alternatively the moveable member may comprises a bell crank comprising an actuator arm portion and an extension finger arm extending at an angle to the actuator arm portion, the extension finger arm being adapted to engage the lever arm abutment of the lever arm when the moveable member is in the engaged position. The actuator assembly may then comprises an actuator mounted between a vehicle mounting and the moveable member to move the movable member, with the actuator preferably mounted to the vehicle an angle to lever arm.

The actuator preferably comprises a hydraulic actuator, and in particular a hydraulic ram.

The actuator assembly preferably acts on the lever arm part way along the length of the lever arm.

In a particular embodiment of the invention there is provided a lever mechanism, or mechanisms, connected between the vehicle chassis and one or more suspension linkages and/or the wheel hubs such that when operated the chassis is pulled down against the resistance of the normal vehicle springing means. The mechanism is provided with a force generating unit such as an hydraulic ram or electric motor. The mechanism is only intended to be operated when the vehicle is stationary. In normal driving it is in connection with the suspension linkage/ wheel hub by means of a freely moving link or lever which does not impede suspension operation. When required to operate the force generating unit moves a lever to engage the normally freely moving link or lever causing it to apply a force to the suspension linkage/wheel hub tending to compress the vehicle's springing means. The reaction in the lever mechanism to this force will pull the vehicle down thus lowering it for ease of access.

An important feature of this invention is that failure of the mechanism will result in the vehicle defaulting to its normal ride height and operating mode. Driving of the vehicle is not therefore compromised.

The present invention will now be described by way of example only with reference to the following figures in which:
Figure 1 shows a first embodiment of the invention in which a hydraulically actuated lever mechanism is connected between a vehicle chassis and a wheel hub, with the vehicle at normal ride height;
Figure 2 shows a pair of such lever mechanisms shown in figure 1 and their associated hydraulic circuit;
Figure 3 shows the mechanism of figure 1 in the pulled down position;
Figure 4 shows the unactuated mechanism of figure 1 but with the vehicle wheel at full droop travel;
Figure 5 shows a second embodiment of the invention in which an alternative hydraulically actuated lever mechanism is connected between a vehicle chassis and a wheel hub, with the vehicle at normal ride height;
Figure 6 shows a pair of such lever mechanisms shown in figure 5 and their associated hydraulic circuit;
Figure 7 shows the mechanism of figure 5 in the pulled down position;
Figure 8 shows the unactuated mechanism of figure 5 but with the vehicle wheel at full droop travel;

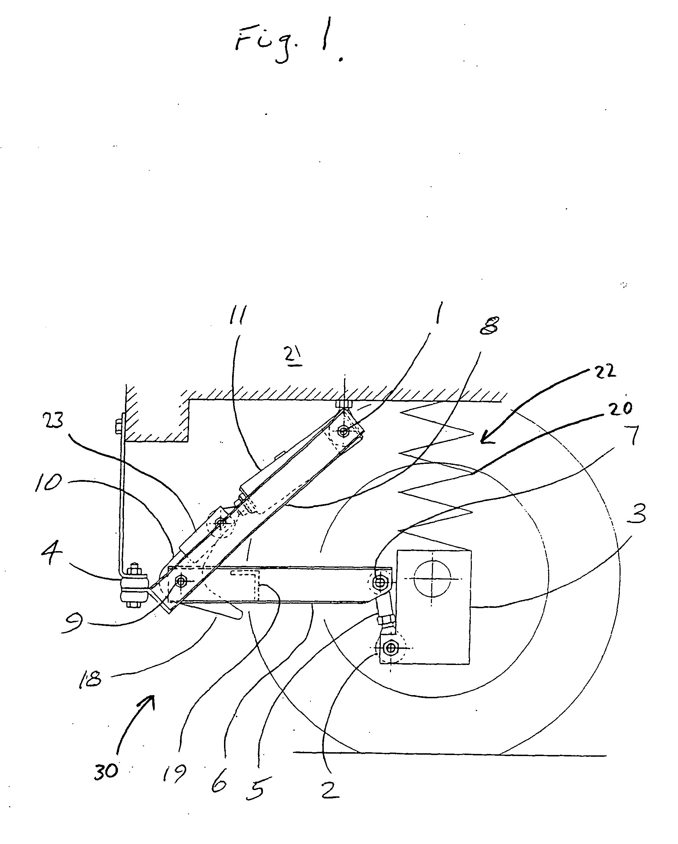

A first embodiment of this invention is shown in figures 1 to 4 in which a transverse pair of vehicle wheel hubs 3 are mounted to the vehicle chassis 21 by a suspension arrangement 22 including the usual suspension springs 20. The suspension 22 is conventional and will not be described in detail. The wheel hubs 3 are also, in accordance with a first embodiment of the invention, each connected to a lever mechanism 30.

As shown in Figure 1, the lever mechanism comprises a spherical joint 1 which has freedom of rotation in all planes and by which means it is attached to a part of the vehicle chassis 21, preferably the floor. A similar spherical joint on one end of the drop link 5 forms an attachment point 2 to the wheel hub 3. Located on the chassis 21, is a third mounting point 4 of flexible rubber. By using three mountings 1,4,2, the mechanism 30 is constrained to operate in its own plane regardless of the geometrical movement of hub attachment point 2 relative to the chassis 21.

The other end of drop link 5 is connected to lever arm 6 by pivot 7 operating in the plane of the lever mechanism 21.

The other end of lever arm 6 is also connected to a pair of tie bars 8 by means of a pivot 9 which also serves to pivotally connect a cranked lever 10 to said tie bars 8. Alternatively the lever arm 6 could be directly pivotally connected to the mounting point 4 on the vehicle chassis 21. The tie bars 8 stiffen and brace the mounting 4 of the lever arm 6. However in other embodiments, in particular if the mounting 4 to the chassis 21 is sufficiently stiff and rigid the tie bars 8 could be omitted. While the cranked lever 10 is preferably pivotally mounted to the vehicle chassis 21 via the same pivot 9 as the lever arm 6 and tie bar 8 thereby reducing the pivot points, it could be separately pivotally mounted to the vehicle chassis 21.

A hydraulic ram 11 is pivotally connected between the cranked lever 10 and also to the end of tie bars 8 by means of a pivot co-axially located with the spherical joint 1. Again the end of the ram 11 could be directly mounted to the chassis 21 in other embodiments, in particular if the tie bars 8 are omitted. The cranked lever 10 comprises a bell crank having an extension finger arm portion 18 extending at an angle to an actuator arm portion 23. The rams 11 and cranked lever 10 form an actuator assembly which acts on and between the vehicle 21 and the lever arm 5 to pivot and move the lever arm 5.

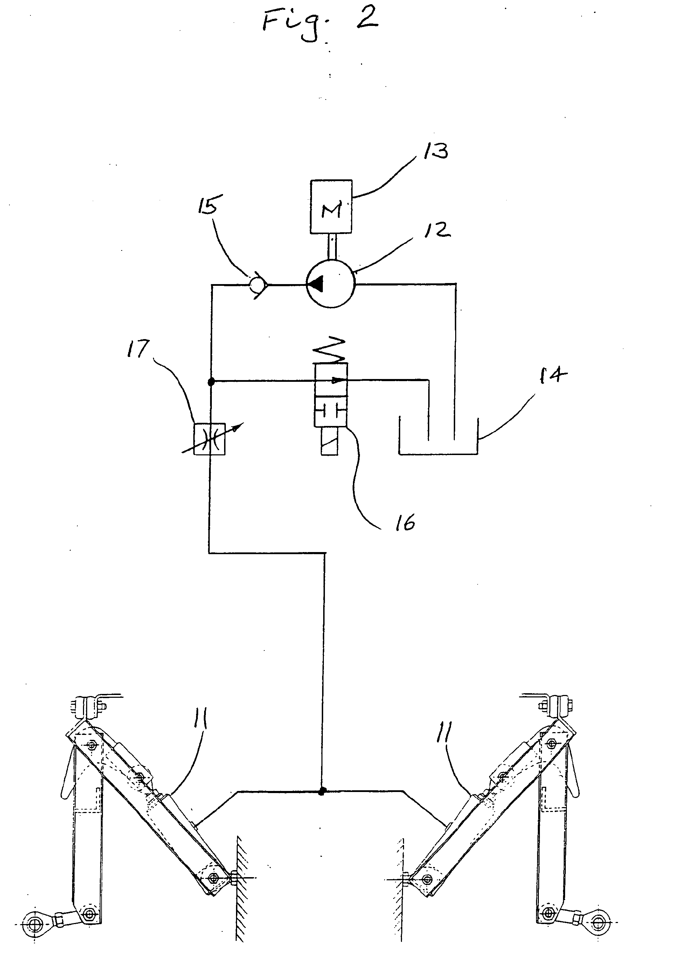

With reference to Figure 2, a hydraulic pump 12, driven by an electric motor 13 draws fluid from a reservoir 14 and discharges it through non-return valve 15 into the hydraulic circuit. A normally open two position solenoid operated valve 16 allows free flow to reservoir 14 when de-energised. Flow to the reservoir 14 is blocked when solenoid valve 16 is energised and the circuit is thereby pressurised to thereby extending rams 11. With the pump motor 13 switched off, and while solenoid valve 16 remains energised, pressure is held in the circuit by non-return valve 15.

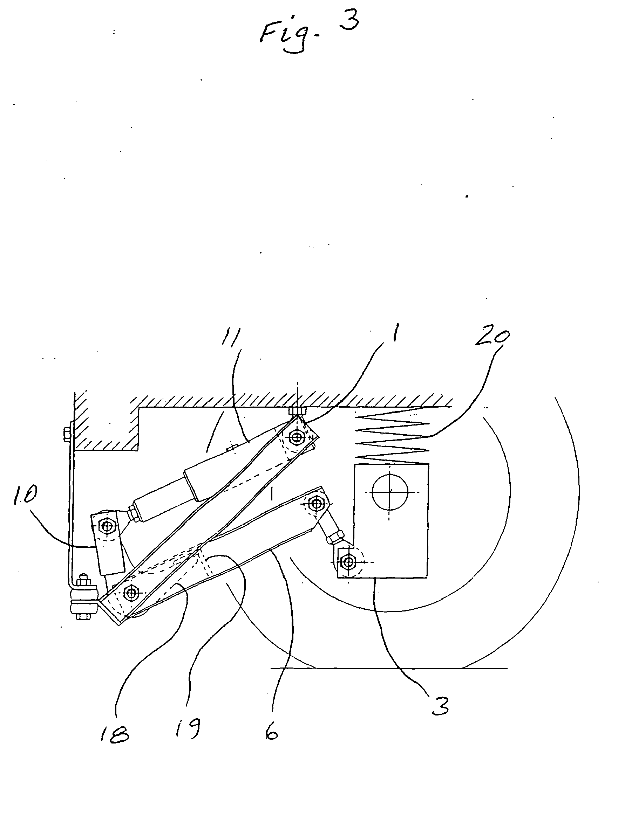

With reference to Figure 3, the vehicle is lowered by supplying fluid pressure to ram 11 thereby extending it and thus rotating the cranked lever 10 into an engagement position and engagement with lever arm 6 by means of selective engagement of finger extension 18 on the cranked lever 10 with an arm abutment 19 on the lever 6. Further extension of the ram 11 when the cranked lever 10 is in engagement with the lever 10, will try to lift the wheel hub 3 and the resulting reaction at the attachment point of spherical joint 1 to the chassis 21 will pull the vehicle chassis 21 down towards and relative to the wheel hub 3, against the suspension 22 and springs 20, thus lowering the vehicle. The vehicle may be returned to normal ride height by de-energising solenoid valve 16 which will allow fluid from the rams 11 to return to the reservoir 14. The rate of return flow from the hydraulic rams 11 is controlled by pressure compensated valve 17, shown in Figure 2. The rams 11 will be pushed back by the force from the normal springing means 20 of the vehicle suspension 22. With the rams 11 retracted the cranked lever is moved to an unengaged position and the finger extension 18 is not forced into engagement with the arm abutment 19. Complete retraction of the rams 11 may be assisted by return springs, not shown, connected to the cranked lever 10 or ram 11, or may be left to normal suspension 22 movement.

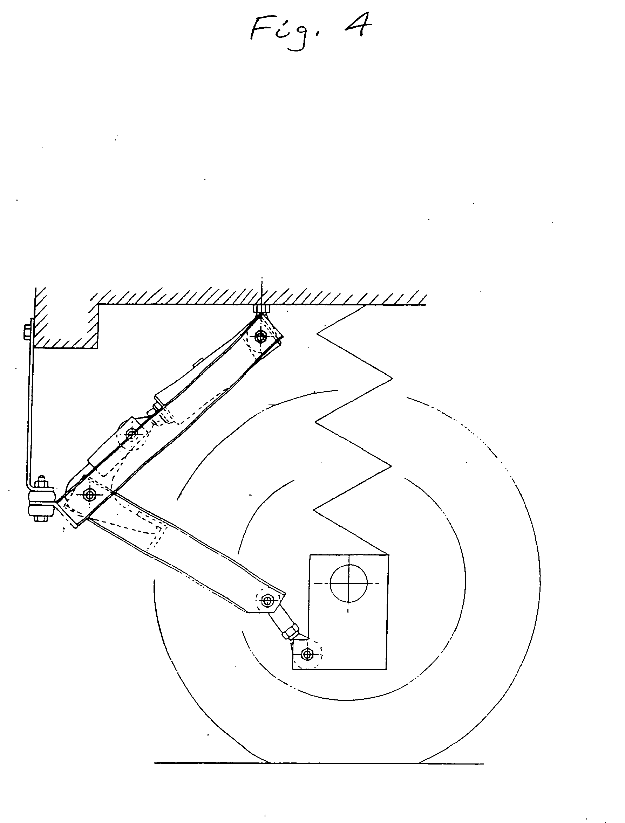

With the vehicle at normal ride height, and the rams 11 retracted into the unengaged position, a rotational clearance between the finger extension 18 and lever arm abutment 19 is established which sufficient to allow the wheel hub 3 to reach its full designed droop position as shown in Figure 4 before contact is made. Accordingly in normal operation with the rams 11 in their retracted positions (as shown in Figure 1) the vehicle can move along the full travel of the suspension 22 without engagement of the finger extension 18 and lever arm abutment 19 and interference from the lever mechanism 30. Similarly if the mechanism 30 fails, provided it is in its normal retracted position as shown in Figure 1, the mechanism will not interfere with the suspension 22 and normal suspension movement. The lever mechanism 30 only selectively engages the suspension to lower the vehicle on the suspension 22 when actuated and when the rams 11 are extended to lower the vehicle.

In this embodiment the vehicle mounting 1 of the tie bar 8 and ram 11 is arranged to be located on or near an extended line of action and movement of the end of the lever arm 5 connected tot eh wheel hub 3. This advantageously reduces the fore and aft loads on the mechanism 30 which reduces the loads on the mounting point 4 to primarily vertical loads which can more easily be reacted, and so reducing the size and strength of the mounting 4.

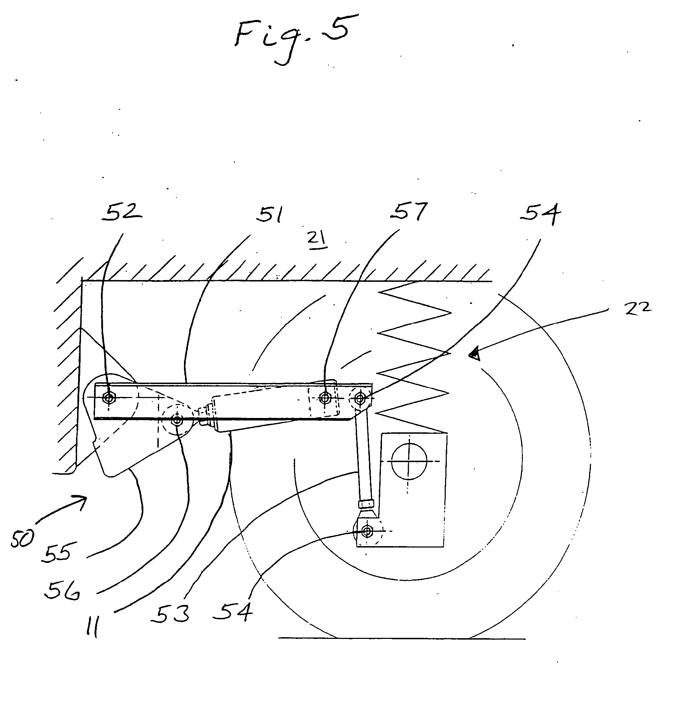

A second embodiment of this invention is shown in figures 5 to 8. The second embodiment is similar to the first and like reference numerals will be used for like features. Similarly to the first embodiment a transverse pair of vehicle wheel hubs 3 mounted to the vehicle chassis 21 by a suspension arrangement 22 including the usual suspension springs 20. The wheel hubs 3 are also, in accordance with the second embodiment of the invention, also each connected to a lever mechanism 50.

As shown in Figure 5 the lever mechanism 50 comprises a lever arm 51 pivotally connect to the vehicle chassis 21 by mounting bracket 52 and on the other end of which is attached a drop link 53 by means of a spherical ball joint 54. A similar spherical ball joint attaches the drop link 53 to wheel hub 3.

A moveable cranked sector element or lever 55 is co-axially pivotally mounted with lever arm 51 on chassis mounting 52. The moveable cranked sector element or lever 55 may be pivotally mounted to the lever arm 51, or alternatively or additionally pivotally mounted to the vehicle chassis 21. As shown in this embodiment the moveable cranked sector element or lever 55 is preferably pivotally mounted to both the vehicle chassis 21 and lever arm 51 about the same pivot and mouthing 52.

A hydraulic ram 11 is pivotally connected to cranked lever 55 by joint 56 and also to the lever arm 51 by pivot 57 adjacent to the drop link ball joint 54. The ram 11 and cranked sector element or lever 55 form an actuator assembly which acts on and between the vehicle 21 and the cranked sector element or lever 55 to pivot and move the cranked sector element or lever 55.

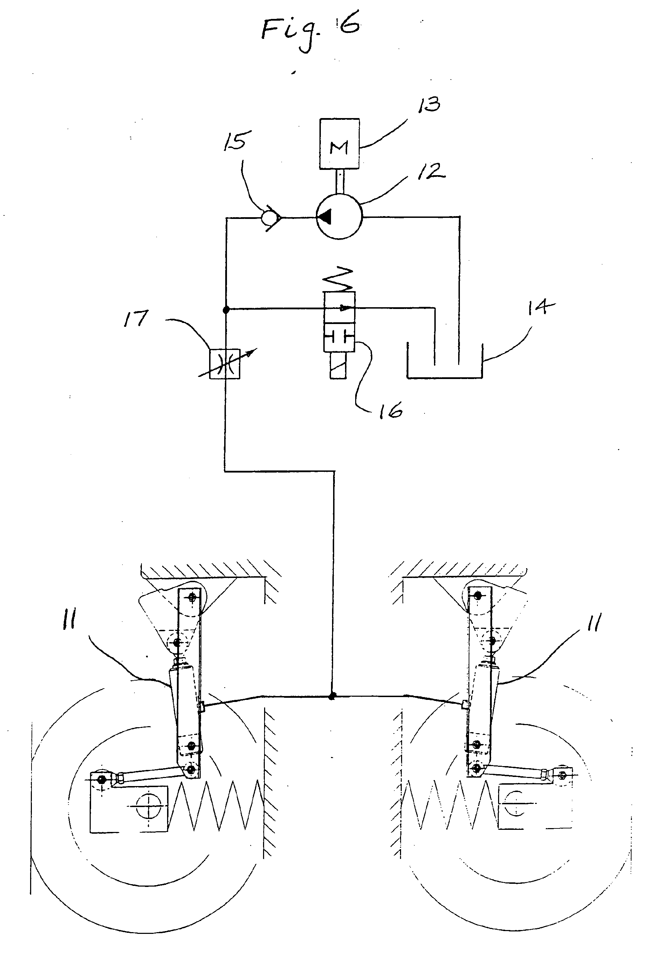

With reference to Figure 6 an hydraulic pump 12, driven by an electric motor 13, draws fluid from a reservoir 14 and discharges it through non-return valve 15 into the hydraulic circuit. A normally open two position solenoid operated valve 16 allows free flow to reservoir 14 when de-energised. Flow to the reservoir 14 is blocked when solenoid valve 16 is energised and the circuit is thereby pressurised. With the pump motor 13 switched off, and while solenoid valve 16 remains energised, pressure is held in the circuit by non-return valve 15.

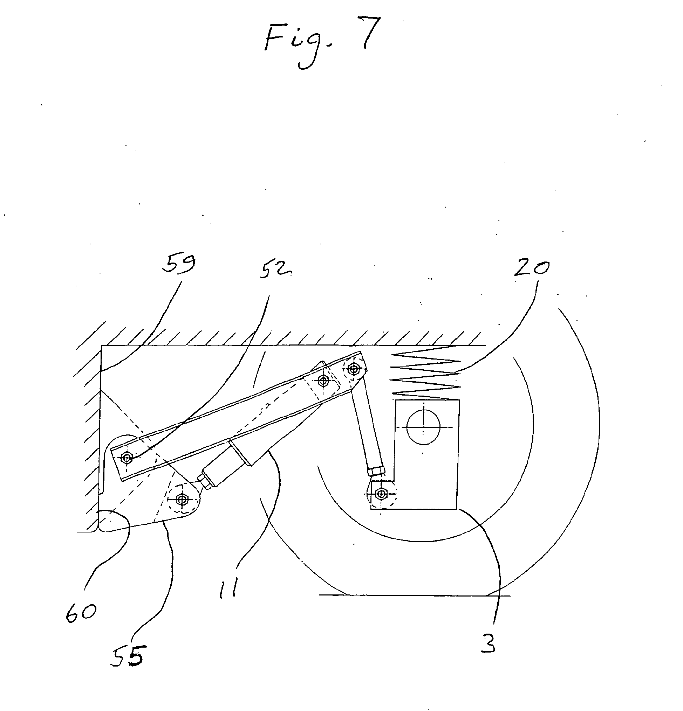

With reference to Figure 7 the vehicle is lowered by supplying fluid pressure to ram 11 thereby extending it and thus rotating the cranked sector element 55 and an abutment 60 of the cranked sector element 55 into an engagement position and engagement with a corresponding chassis face 59 of the vehicle chassis 21. It will be appreciated that the corresponding chassis face 59 may be an existing part of the vehicle chassis 21 with the lever mechanism 50 being suitable located to this part, or may be provided by an additional member attached to the chasis 21 for the abutment 60 to abut against. The chassis face 59 may also be suitably strengthen to withstand the abutment of the abutment 60. Further extension of the ram 11 will try to lift the wheel hub 3 and the resulting reaction at chassis mounting 52 and abutment 60 will pull the vehicle down against its suspension 22 and on its springs 20, thus lowering the vehicle for easier access. The vehicle may be returned to normal ride height by de-energising solenoid valve 16 which will allow fluid from the rams to return to the reservoir 14. The rate of return flow from the hydraulic rams 11 is controlled by pressure compensated valve 17. The rams 11 will be pushed back by the force from the normal springing means 20 of the vehicle. Complete retraction of the rams 11 may be assisted by return springs, not shown, connected to the cranked sector element 55 or ram 11, or left to normal suspension movement.

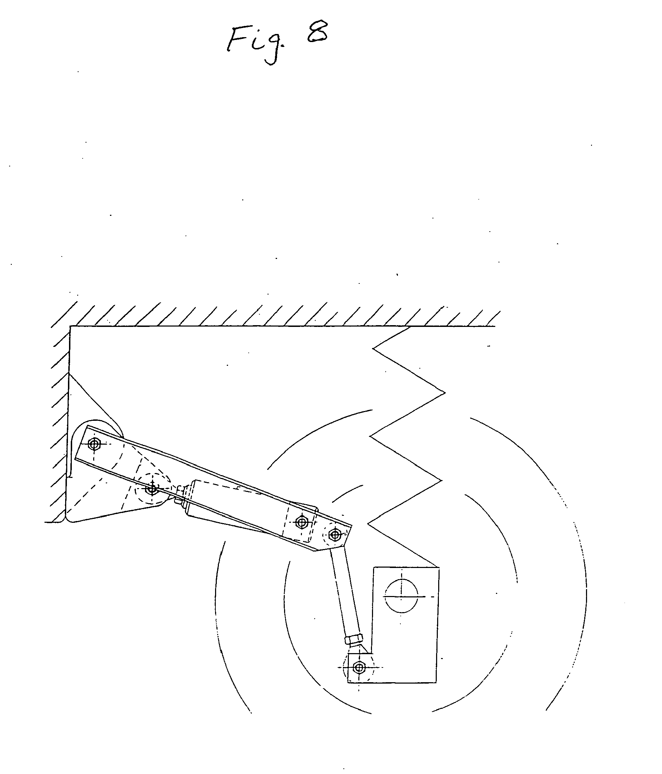

With the vehicle at normal ride height, and the rams retracted into an unengaged position, a rotational clearance between the chassis face 59 and abutment 60 is provided which is sufficient to allow the wheel hub 3 to reach its full designed droop position as shown in Figure 8 before contact. is made between the chassis face 59 and abutment 60. Accordingly in normal operation with the rams 11 in their retracted positions (as shown in figure 5) the vehicle can move along the full travel of the suspension 22 without engagement of the abutment 60 of the cranked sector 55 with the chassis face 59 and interference from the lever mechanism 50. Similarly if the mechanism 30 fails, provided it is in its normal retracted position as shown in figure 1, the mechanism 50 will not interfere with the suspension 22 and normal suspension movement. The lever mechanism 50 only selectively engages the suspension to lower the vehicle on the suspension 22 when actuated and the rams 11 are extended to lower the vehicle.

The lever mechanisms 30,50 of both embodiments can be simply bolted onto existing vehicles and used with existing vehicle suspension arrangements without interfering with the operation of the existing vehicle suspension 22. This is a particular feature of the invention, and can be contrasted with other arrangements to lower a vehicle in which the suspension 22 is modified or a special suspension arrangement is provided to adjust the height. Alternatively the mechanisms 30,50 could be incorporated into the original vehicle design, but again in addition to the normal suspension arrangements 22.

In the above embodiments hydraulic rams 11 have are used. It will be appreciated that other actuator arrangements could also be used in other embodiments. In addition it is not necessary, but is preferable to use rams 11 and rotary motor arrangements could be used. However it is preferable to use hydraulic arrangements since they offer faster response and power, as compared for example to pneumatic arrangements, in a compact unit. In particular hydraulic rams are preferred since they provide sufficient power in a compact arrangement to move the wheel hub assembly against the suspension. The lever arm 11 arrangement of these embodiments advantageously amplifies the movement of the rams 11 and action on the lever arm 5,51 to sufficiently move the wheel hub on the suspension and lower the vehicle.

The lever mechanism 30,50 may be mounted on either the front wheels or rear wheels of a vehicle to lower the front or rear of the vehicle or lower the whole vehicle. The mechanisms 30,50 could also be provided on only one wheel or on only one side of the vehicle, for example if used on a bus to just lower the one corner or side of the vehicle where for example the main passenger doors are located. In addition the mechanisms 30,50 could be separately controlled to allow for selective lowering of the vehicle.

While these embodiments of the invention operate to lower the vehicle, and this is the preferred operation, it will be appreciated that in other embodiments the mechanism 30,50 could be configured to raise the vehicle on its suspension 22 and/or both raise and lower the vehicle.

It will also be appreciated that various other further modifications may be made to the specific embodiments described above. In particular while it is preferred to have the lever arm 5 and 51 connected to the wheel hub assembly 3, the end of the lever arm could selectively engage the wheel hub assembly only when actuated. In such a case the actuator assembly could be attached between the lever arm and vehicle, with the selective engagement being provided by the selective engagement of the lever arm with the hub assembly. It is though preferred for the lever 6,51 to be connected to the hub assembly 3 and the actuator assembly selectively engaged between the lever arm 5,51 since the hub assembly is subject to more movement.

The principle and mode of operation of this invention have been explained and illustrated in its preferred embodiment. However, it must be understood that this invention may be practised otherwise than as specifically explained and illustrated without departing from its scope.

## Claims

1. A vehicle height adjustment mechanism (30,50) for a vehicle (21) having a wheel hub assembly (3) mounted to the vehicle (21) on a vehicle suspension (22), the mechanism (30,50) comprising:-
a lever arm (6,51) having a pivotal vehicle mounting (9) to pivotally mount the lever arm (6,51) to the vehicle (21), the lever arm (6,51) extending between the pivotal vehicle mounting (9) and the wheel hub assembly (3); and
an actuator assembly (11&10, 11&55) configured to act between the lever arm (6,51) and vehicle (21) to pivot the lever arm (6,51) to act on and move the wheel hub assembly (3) relative to the vehicle against the suspension (22),
wherein the mechanism (30,50) is only selectively engaged to act on and move the wheel hub assembly (3) relative to the vehicle (21) against the suspension (22).

2. A vehicle height adjustment mechanism (30, 50) of claim 1 wherein the actuator assembly (11&10, 11&55) is configured to be selectively engaged to act between the lever arm and vehicle to pivot the lever arm (6,51) to act on and move the wheel hub assembly (3) relative to the vehicle against the suspension (22).

3. A vehicle height adjustment mechanism (30, 50) of claim 2 wherein the actuator assembly (11&10, 11&55) is moveable between engaged and unengaged positions.

4. A vehicle height adjustment mechanism (30, 50) of claim 3 wherein when in the unengaged positions the actuator assembly (11&10, 11&55) and lever arm (6,51) does not act between the lever arm (6,51) and vehicle and allows free movement of wheel hub assembly (3) on the vehicle suspension (22).

5. A vehicle height adjustment mechanism (30,50) of claim 3 wherein when in the unengaged positions the actuator assembly (11&10, 11&55) does not act between the lever arm (6,51) and vehicle and allows the lever arm (6,51) to freely pivot about its pivotal vehicle mounting (4) when the actuator assembly (11&10, 11&55) is unengaged.

6. A vehicle height adjustment mechanism (30,50) of any preceding claim wherein the lever arm (6,51) pivotal vehicle mounting (4) is disposed at one end of the lever arm (6,51).

7. A vehicle height adjustment mechanism (30,50) of any preceding claim wherein the lever arm (6,51) engages the wheel hub assembly (3).

8. A vehicle height adjustment mechanism (30,50) of any preceding claim wherein the lever arm (6,51) is contectable to the wheel hub assembly (3).

9. A vehicle height adjustment mechanism (30,50) of claim 8 further comprising a drop link (5, 53) to connect the lever arm (6,51) to the wheel hub assembly (3).

10. A vehicle height adjustment mechanism (30,50) of any preceding claim wherein the actuator assembly (11&10, 11&55) comprises a moveable member (10,55) which is moveable between an engaged and an unengaged position.

11. A vehicle height adjustment mechanism (30,50) of claim 10 wherein the moveable member (10,55) is pivotally mounted to the vehicle.

12. A vehicle height adjustment mechanism (30,50) of claim 10 or 11 wherein the moveable member (10,55) is pivotally mounted to the lever arm (6,51).

13. A vehicle height adjustment mechanism (30,50) of any one of claims 10 to 12 wherein the moveable member (10, 55) is pivotally mounted about the lever arm pivotal vehicle mounting (4).

14. A vehicle height adjustment mechanism (50) of any one of claims 10 to 13 wherein the moveable member (55) comprises an abutment which is adapted to engage the vehicle when the moveable member (55) is in the engaged position.

15. A vehicle height adjustment mechanism (50) of any one of claims 10 to 14 wherein the actuator assembly (11&55) comprises an actuator (11) mounted between the lever arm (51) and the moveable member (55) to move the movable member (55).

16. A vehicle height adjustment mechanism (30) of any one of claims 10 to 13 wherein the moveable member (10) comprises an extension finger arm (18) which is adapted to engage the lever arm abutment (19) of the lever arm (6) when the moveable member (10) is in the engaged position.

17. A vehicle height adjustment mechanism (30) of claim 16 wherein the moveable member (10) comprises a bell crank (10) comprising the extension finger arm (18) extending at an angle to an actuator arm portion (23).

18. A vehicle height adjustment mechanism (30) of any one of claims 10 to 13 or 16 or 17 wherein the actuator assembly (11&10) comprises an actuator (11) mounted between a vehicle mounting (1) and the moveable member (10) to move the moveable member (10).

19. A vehicle height adjustment mechanism (30) of claim 17 wherein the actuator (11) is mounted to the vehicle an angle to lever arm (6,51).

20. A vehicle height adjustment mechanism (30,50) of any one of claims 14, 17, or 18 wherein the actuator (11) comprises a hydraulic actuator.

21. A vehicle height adjustment mechanism (30, 50) of claim 19 wherein the hydraulic actuator (11) comprises a hydraulic ram.

22. A vehicle height adjustment mechanism (30,50) of any preceding claim further comprising a tie bar (8) mounted between the lever arm (6,51) pivotal vehicle mounting (4) and a vehicle mounting (1).

23. A vehicle height adjustment mechanism (30,50) of any preceding claim wherein the actuator assembly (11&10, 11&55) is configured when selectively engaged to act between the lever arm (6,51) and vehicle to pivot the lever arm (6,51) to move the wheel hub assembly (3) generally vertically towards the vehicle to in use lower the vehicle on its suspension (22).

24. A vehicle height adjustment mechanism (30,50) of any preceding claim wherein the actuator assembly (11&10, 11&55) acts on the lever arm (6,51) part way along the length of the lever arm (6,51).

25. Vehicle comprising at least one wheel hub assembly (3) mounted on a vehicle suspension (22), and a vehicle height adjustment mechanism (30,50) of any preceding claim to move the wheel hub assembly (3) relative to the vehicle against the suspension (22).
